# FASCICULE DE BREVET EUROPEEN

(11) **EP 3 019 822 B1**
(45) Date de publication et mention de la délivrance du brevet: **17.05.2017**
(21) Numéro de dépôt: 14738460.6
(22) Date de dépôt: 04.07.2014
(51) Int. Cl.: G01B 9/02

(54) **DISPOSITIF OPTIQUE DE MESURE D'UN PARAMÈTRE PHYSIQUE ET PROCÉDÉ ASSOCIÉ**
OPTISCHE VORRICHTUNG ZUR MESSUNG EINES PHYSIKALISCHEN PARAMETERS UND ZUGEHÖRIGES VERFAHREN
OPTICAL DEVICE FOR MEASURING A PHYSICAL PARAMETER AND ASSOCIATED METHOD

(30) Priorité: 08.07.2013 FR 1356675
(43) Date de publication de la demande: 18.05.2016
(73) Titulaire: Institut National Polytechnique de Toulouse (INPT), 31029 Toulouse Cedex 4 (FR); Centre National de la Recherche Scientifique (C.N.R.S.), 75794 Paris Cedex 16 (FR)
(72) Inventeur: BOSCH, Thierry, F-31500 Toulouse (FR); BONY, Francis, F-31590 Lavalette (FR); LUNA ARRIAGA, Antonio, 31000 Toulouse (FR)
(74) Mandataire: Ipside
(86) Numéro de dépôt international: PCT/EP2014/064349
(87) Numéro de publication internationale: WO 2015/004026

(56) Documents cités:
- NORGIA M ET AL: "High resolution self-mixing laser rangefinder", REVIEW OF SCIENTIFIC INSTRUMENTS, AIP, MELVILLE, NY, US, vol. 83, no. 4, 1 avril 2012 (2012-04-01), pages 45113-45113, XP012162261, ISSN: 0034-6748, DOI: 10.1063/1.3703311 [extrait le 2012-04-16]
- LU WEI ET AL: "Phase Unwrapping of Self-mixing Signals Observed in Optical Feedback Interferometry for Displacement Measurement", INTELLIGENT SIGNAL PROCESSING AND COMMUNICATIONS, 2006. ISPACS '0 6. INTERNATIONAL SYMPOSIUM ON, IEEE, PI, 1 décembre 2006 (2006-12-01), pages 780-783, XP031092534, ISBN: 978-0-7803-9732-3
- D A Zweig ET AL: "A Hubert Transform Algorithm For Fringe-Pattern Analysis", , 1 novembre 1990 (1990-11-01), XP055113630, Extrait de l'Internet: URL:http://proceedings.spiedigitallibrary. org/data/Conferences/SPIEP/43335/295_1.pdf [extrait le 2014-04-10]
- KENJU OTSUKA ET AL: "Real-time nanometer-vibration measurement with a self-mixing microchip solid-state laser", OPTICS LETTERS, vol. 27, no. 15, 1 août 2002 (2002-08-01), page 1339, XP055113625, ISSN: 0146-9592, DOI: 10.1364/OL.27.001339
- USMAN ZABIT ET AL: "Self-Mixing Laser Sensor for Large Displacements: Signal Recovery in the Presence of Speckle", IEEE SENSORS JOURNAL, IEEE SERVICE CENTER, NEW YORK, NY, US, vol. 13, no. 2, 1 février 2013 (2013-02-01), pages 824-831, XP011487795, ISSN: 1530-437X, DOI: 10.1109/JSEN.2012.2227718

## Description

### Domaine de l'invention

La présente invention est relative au domaine des dispositifs de mesure optoélectroniques. Plus particulièrement, l'invention concerne un dispositif optique pour la détermination d'un paramètre physique lié à une cible et un procédé de traitement associé, quelque soit l'état de surface de la cible et sa distance, en temps réel. L'invention est basée principalement à partir du phénomène de rétro-injection optique et est avantageusement utilisée pour la mesure de déplacement d'une cible.

### Etat de la technique

Il existe de nombreux types de dispositifs de mesure de déplacement, de vibration, de distance,..., d'une cible permettant des mesures dites non destructives, c'est à dire ne détériorant pas la cible sur laquelle elles sont effectuées.

Des méthodes optiques sont souvent utilisées car elles présentent l'avantage d'être sans contact avec la cible et non intrusives. Elles sont basées sur la transmission d'un faisceau lumineux par une source lumineuse laser vers une cible et la mesure des changements des propriétés optiques du faisceau lumineux renvoyé de la cible par des moyens de détection et de mesure adaptés.

Parmi les dispositifs optiques existants, on peut citer entre autre les interféromètres de type Michelson, les interféromètres à fibre optique, les capteurs par triangulation. Cependant, pour ces types de dispositifs, l'utilisation de nombreux composants optiques est nécessaire, ce qui rend difficile la réalisation de capteurs compacts, simples d'utilisation et de faible coût. Ces dispositifs présentent de plus, pour certains, une plage de mesure limitée sur quelques centimètres voire millimètres.

Les dispositifs basés sur le phénomène de rétro-injection optique, généralement connu sous le nom anglo-saxon de self-mixing, offrent en comparaison un système de réalisation compact et flexible, à faible coût.

Ces dispositifs sont simples à réaliser et ne nécessitent qu'une source lumineuse laser émettant un faisceau lumineux de mesure sur la cible dont le déplacement est à mesurer par exemple. Une portion du faisceau de mesure est réfléchie par la cible et réinjectée dans une cavité active de la source laser, produisant des interférences dans la cavité active de la source laser.

Lorsqu'un chemin optique parcouru par le faisceau de mesure issu de la source lumineuse laser et rencontrant la cible varie, par exemple en fonction du déplacement de la cible, des fluctuations notamment de la puissance optique émise se produisent, causées par ces interférences. Ces fluctuations sont détectées soit par un photo-détecteur, tel que par exemple une photodiode située sur une face arrière de la source lumineuse laser, soit directement via une tension de jonction de la source lumineuse laser. Les signaux issus de la photodiode ou de la tension de jonction de la source lumineuse laser sont traités par des moyens de traitement adaptés et l'information relative au déplacement de la cible ou à la variation de l'indice de réfraction du milieu en est déduite. Ainsi la source lumineuse laser joue à la fois le rôle d'une source lumineuse et d'un micro-interféromètre, sans nécessiter de composants optiques externes. Toutefois, lorsque la cible est placée au-delà de quelques centimètres, une lentille de focalisation peut être intercalée entre la source lumineuse laser et la cible.

La principale différence avec des interférences classiques réside dans le fait que les interférences dites de type "self-mixing" ont lieu dans un milieu actif (une cavité semi-conducteur ou à gaz) alors que les interférences classiques sont généralement observées en espace libre ou diélectrique, c'est à dire dans un milieu passif. Cette différence notable se traduit par une forme non sinusoïdale de la modulation d'intensité générée par les interférences dans le cas du "self-mixing", contrairement aux interférences classiques.

Les signaux interférométriques typiques du phénomène de rétro-injection optique représentent des franges interférométriques présentant une forme spécifique en dents de scie asymétriques plus ou moins prononcée.

Ces dispositifs de mesure par rétro-injection optique présentent ainsi l'avantage d'être auto-alignés, compacts et moins coûteux que par interférométrie traditionnelle.

Les dispositifs de mesure existants présentent l'inconvénient d'être sensibles au taux de rétro-injection dans la source lumineuse laser. Ce taux de rétro-injection, définit par le paramètre adimensionnel C, est fonction de la distance de la source lumineuse laser à la cible et de l'état de surface de celle-ci. Une cible présentant un état de surface rugueux entraîne une variation aléatoire et brutale du taux de rétro-injection C dans la cavité active de la source lumineuse laser, ce qui modifie et altère l'allure du signal interférométrique à traiter.

La forme des franges interférométriques du signal interférométrique présente d'une part, une forme en dents de scie asymétriques qui est d'autant plus marquée que la rétro-injection optique dans la source lumineuse laser est forte et d'autre part, un hystérésis lorsque la valeur du taux de rétro-injection optique C est élevée, de l'ordre d'au moins 4,5.

De plus, lorsque la cible présente un état de surface rugueux, un phénomène d'altération aléatoire du signal interférométrique résulte de la superposition incohérente des faisceaux réfléchis. Ce phénomène, connu sous le nom de « tavelures » ou « speckle » en anglais, entraîne de fortes modulations de l'enveloppe du signal interférométrique, pouvant aller jusqu'à une perte dudit signal d'interférence, donc une perte d'information sur le déplacement de la cible, et altère également le traitement du signal interférométrique.

A titre d'exemples de dispositifs de mesure à rétro-injection optique préconisant de travailler sur des cibles rugueuses, on peut citer :
- Norgia et al. (« Interferometric measurements of displacement on a diffusing target by a speckle tracking technique », IEEE Journal of Quantum Electronics, vol.37, n°6, June 2001),
- Guiliani et al. (« Self-mixing laser diode vibrometer », Meas. Sci. Technol. 14 (2003) 24-32),
- Magnani et al. ("Self-mixing vibrometer with real-time digital signal élaboration" Applied Optics, vol.51, n° 21, 20/07/2012).

Dans la publication scientifique de Norgia et al., le dispositif de mesure par retro-injection optique comporte des composants piezo-électriques pour utiliser une technique de suivi du speckle. Ceci consiste à faire varier la position transversale du spot du faisceau sur la cible, en fonction de l'amplitude maximale relative du signal reçu.

Ce dispositif de mesure a recours à des composants externes qui sont incompatibles de l'aspect simplicité de réalisation et dont l'encombrement peut être incompatible avec de nombreuses applications, notamment dans le domaine des systèmes embarqués.

Dans la publication scientifique de Guiliani et al., le dispositif de mesure par retro-injection optique a recours à une boucle de rétroaction électronique sur la diode laser pour stabiliser le signal interférométrique reçu. Le dispositif utilise une modulation de courant triangulaire sur le faisceau émis pour distinguer la direction des franges. Le principe consiste à repérer le milieu des franges interférométriques par sa tension électronique afin de pouvoir garantir sa détection par une comparaison des tensions.

Cependant, ce dispositif de mesure ne propose des performances correctes uniquement pour le type de signaux interférométriques présentant une allure en dents de scie avec un phénomène d'hystérésis, signaux typiques de surfaces hautement réfléchissantes et uniquement pour de faibles amplitudes de vibrations de la cible, au maximum 180 µm.

De plus, il a recours à des composants externes, deux lentilles espacées de 40 cm, ce qui est incompatible avec la notion d'encombrement et de fragilité du dispositif de mesure.

Dans la publication scientifique de Magnani et al., le dispositif de mesure par retro-injection optique fait varier le diamètre du spot du faisceau par un mécanisme d'auto focalisation dans la lentille, similaire aux appareils photo numériques du marché, ce qui demande quelques secondes d'adaptation quand l'allure du signal est modifiée (cas fréquemment rencontré avec des cibles rugueuses).

De plus, le dispositif est limité à la mesure de signaux d'amplitude sensiblement constante, au risque d'effectuer un redémarrage du mécanisme d'auto focalisation lorsque le seuil automatiquement préétabli n'est plus valable. Le document XP12162261 décrit un dispositif de mesure par rétro-injection optique, pour la détermination de déplacement de cibles. Le signal interférométrique est filtré pour supprimer la composante continue en utilisant un filtre passe-bande. Le document XP031092534 décrit un dispositif optique basé sur le phénomène de rétro-injection optique, pour la détermination de déplacement de cibles. Le signal interférométrique est filtré avec un filtre médian suivi par un filtre moyen pour supprimer le bruit introduit par la présence de speckles sur la cible.

Les exemples de dispositifs de mesure précédemment décrits nécessitent un cahier des charges bien précis (plages de mesure, type de surface, encombrement, ...), ont recours à des composants extérieurs et peuvent difficilement évoluer lors d'un changement des conditions d'utilisation.

### Exposé de l'invention

L'invention a donc pour but de proposer un dispositif de mesure et un procédé de traitement d'un signal interférométrique qui s'adapte à tout type de cible et de distance avec celle-ci, et ce, en temps réel.

L'invention a également pour but de proposer un dispositif de mesure basé sur le phénomène de rétro-injection optique répondant à des contraintes de taille, de performance et de coût rendant son utilisation réaliste en milieu industriel.

A cet effet, la présente invention vise sous un premier aspect un dispositif optique pour la détermination d'un paramètre physique. Le dispositif comporte :
- une source lumineuse laser configurée pour générer un faisceau lumineux, dit faisceau émis, en direction d'une cible,
- un moyen de détection d'un signal interférométrique SM(t), ledit signal interférométrique comportant l'information sur le paramètre physique à déterminer, et étant généré par une interférence entre le faisceau émis et un faisceau lumineux réfléchi par la cible, dans une cavité optique de la source lumineuse laser,
- des moyens de conversion du signal interférométrique SM(t) obtenu par le moyen de détection en une mesure du paramètre physique.

Les moyens de conversion comportent:
- des premiers moyens de suppression d'une composante continue Off(t) du signal interférométrique SM(t),
- des seconds moyens de détermination de pics interférométriques du signal interférométrique SM(t) obtenus à partir du signal obtenu en sortie des premiers moyens, les seconds moyens comportant un filtre de Hilbert.

Le paramètre physique qu'il est possible de mesurer est notamment un déplacement de la cible, sa vitesse, sa distance à la source lumineuse laser.

Le signal interférométrique SM(t) obtenu est un signal typique d'une rétro-injection optique et se différentie des signaux interférométriques, dit classiques, en ce que il représente des franges interférométriques non sinusoïdales, présentant une forme spécifique en dents de scie asymétriques plus ou moins prononcée. De telles franges interférométriques présentent chacune un front montant et un front descendant. On définit un front montant d'une frange d'interférence comme le front présentant le plus grand degré d'inclinaison par rapport à l'axe des abscisses, c'est-à-dire le plus montant.

Le degré d'inclinaison des dents de scie augmente avec le taux de retro-injection optique dans la source lumineuse laser.

Par composante continue, on entend la valeur moyenne du signal interférométrique.

Par suppression d'une composante continue, on entend le recalage du signal interférométrique SM(t) pour le centrer autour de zéro.

Par pic interférométrique, on entend le front montant d'une frange d'interférence.

Un tel dispositif optique permet avantageusement la détermination d'un paramètre physique sans condition sur l'allure du signal interférométrique, c'est-à-dire sans condition sur l'état de surface de la cible, coopérative ou non, et sans condition sur le taux de rétro-injection optique.

Suivant des modes de réalisation préférés, l'invention répond en outre aux caractéristiques suivantes, mises en oeuvre séparément ou en chacune de leurs combinaisons techniquement opérantes. Les seconds moyens pour déterminer les pics interférométriques du signal interférométrique comportent un filtre de Hilbert. Les premiers moyens sont configurés pour supprimer la composante continue de façon locale pour chacune des franges d'interférence du signal interférométrique.

En d'autres termes, la suppression de la composante continue n'est pas une suppression globale (suppression de la valeur moyenne de l'ensemble des franges d'interférences), comme le réalise un filtre médian ou un filtre moyenneur. Pour chaque frange d'interférence, la composante continue associée dite locale est supprimée. Les composantes continues locales sont supprimées une par une, indépendamment les unes des autres. La suppression de ces composantes continues locales est réalisée sur l'ensemble des franges interférométriques.

Dans des modes de réalisation particuliers, le dispositif optique ne comporte pas de moyens de calibrage de la source lumineuse laser et ou de moyens de calibrage du taux C de rétro-injection optique de la cible.

Dans des modes de réalisation particuliers, le dispositif optique ne comporte pas de composants extérieurs. Eventuellement, le dispositif comporte une lentille de focalisation lorsque la cible est placée au-delà de quelques centimètres.

Un tel dispositif présente un avantage non négligeable en terme d'encombrement et d'installation, donc de facilité de mise en oeuvre, et rend donc son utilisation réaliste en milieu industriel.

L'invention est également relative à un procédé de traitement d'un signal interférométrique SM(t) obtenu par retro-injection optique, le signal étant caractérisé par des franges d'interférences de forme en dents de scie asymétriques. Le procédé comporte les étapes successives de :
- suppression d'une composante continue du signal interférométrique SM(t), pour obtenir un signal corrigé SM_{c}(t), puis
- détermination de pics interférométriques dudit signal interférométrique SM(t) à partir du signal corrigé SM_{c}(t).

L'étape de suppression d'une composante continue permet avantageusement de faciliter le traitement ultérieur du signal interférométrique SM(t).

Un tel procédé de traitement est avantageusement insensible au phénomène d'altération aléatoire du signal d'interférence, du à des perturbations quelconques, et permet par conséquent de traiter tous les types de signaux interférométriques obtenus par rétro-injection optique.

Un tel procédé apporte également un degré supérieur d'efficacité dans le traitement des signaux interférométriques, car il peut être réalisé en temps réel.

Suivant des modes de mise en oeuvre préférés, l'invention répond en outre aux caractéristiques suivantes, mises en oeuvre séparément ou en chacune de leurs combinaisons techniquement opérantes. La composante continue Off(t) du signal interférométrique SM(t) est supprimée de façon locale, pour chaque frange d'interférence du signal interférométrique SM(t).

La composante continue Off(t) est composée d'un ensemble de segments mis bout à bout.

La composante continue Off(t) est constituée d'un ensemble de composantes continues dite locales. Chaque composante continue locale est définie par rapport à une frange d'interférence du signal interférométrique SM(t). Une composante continue locale est mesurée pour chaque frange d'interférence détectée du signal interférométrique SM(t). La détermination des pics interférométriques est obtenue par application d'un filtre de Hilbert au signal corrigé SM_{c}(t).

La suppression de la composante continue associée à l'utilisation du filtre de Hilbert permet ainsi de s'affranchir des phénomènes d'altération aléatoire du signal interférométrique, que sont, entre autres, le phénomène d'hystérésis ou le phénomène d'évanouissement momentané de l'amplitude, communément connus sous le terme de fading, lié au speckle.

Ainsi, un tel procédé de traitement présente un intérêt particulier lorsqu'il est associé à un dispositif tel que précédemment décrit dans au moins l'un de ses modes de réalisation, pour la mesure sur des cibles rugueuses.

L'affranchissement des phénomènes d'hystérésis et de fading dans le signal interférométrique SM(t) permet de ne recourir avantageusement qu'à un unique algorithme de traitement de signal, quelque soit la distance et l'état de surface d'une cible dont on cherche à mesurer un paramètre physique.

Le traitement du signal interférométrique est fortement simplifié car il est automatique, par simple filtrage. Et contrairement aux autres procédés existants, il n'est pas nécessaire de travailler sur une période du signal interférométrique pour retrouver l'information nécessaire, seuls deux franges interférométriques suffisent. Il n'est donc plus nécessaire de réaliser un stockage de points avant de démarrer le traitement de signal. Le nombre de points à stocker au départ pour reconstruire le paramètre physique est ainsi considérablement réduit, ce qui diminue les ressources nécessaires au traitement du signal. Une méthode connue de détermination des pics interférométriques, cité comme exemple, à partir d'un calcul d'enveloppes du signal interférométrique, est décrite dans la publication de Usman Zabit et al.: « Self-mixing Laser sensor for large displacements: signal recovery in the présence of speckle », IEEE Sensors Journal, vol.13, n°2, Février 2013.

L'invention est également relative à un procédé de détermination d'un paramètre physique comportant une étape de traitement d'un signal interférométrique SM(t) selon le procédé de traitement défini ci-dessus dans au moins l'un de ses modes de mise en oeuvre, ledit signal interférométrique comportant l'information sur le paramètre physique à déterminer, puis une étape de détermination du paramètre physique à partir de la détermination des pics interférométriques du signal interférométrique SM(t).

La détermination de l'ensemble des pics interférométriques du signal interférométrique SM(t) à partir du procédé de traitement défini ci-dessus dans au moins l'un de ses modes de mise en oeuvre permet avantageusement d'améliorer la précision de la mesure du paramètre physique recherché.

Avantageusement, le procédé ne comporte pas d'étape de calibrage préalable de la source lumineuse laser, ni d'étape de calibrage du taux de rétro-injection optique C.

Ainsi, l'affranchissement d'une étape de calibrage, quelle qu'elle soit, permet une implémentation temps réel. En effet, une erreur lors d'une étape de calibrage empêche le déterminisme ou la répétabilité des mesures du dispositif associé au procédé.

De plus, la réalisation d'une étape de calibrage nécessite le plus souvent d'avoir recours des spécialistes techniques.

Le procédé de l'invention, ne nécessitant pas d'étape de calibrage de la source lumineuse laser et/ou du taux de rétro-injection optique, permet ainsi de rendre accessible l'utilisation du procédé par des personnes non spécialisés, ce qui rend son utilisation réaliste en milieu industriel.

Dans un exemple préféré de mise en oeuvre, le procédé permet la reconstitution du déplacement de la cible à partir de la détermination des pics interférométriques du signal interférométrique SM(t).

Le procédé permet avantageusement la reconstruction du déplacement d'une cible non coopérative, sans ajout de composant externe dans le dispositif associé.

La détermination de l'ensemble des pics interférométriques du signal interférométrique SM(t) à partir du procédé de traitement défini ci-dessus dans au moins l'un de ses modes de mise en oeuvre permet avantageusement d'améliorer la précision du déplacement de la cible.

### Présentation des figures

La description qui va suivre, donnée uniquement à titre d'exemple d'un mode de réalisation de l'invention, est faite en se référant aux figures annexées dans lesquelles :
Figure 1, illustre schématiquement un exemple de dispositif de mesure de déplacement d'une cible, basé sur le phénomène de rétro-injection optique selon l'invention,
Figure 2, illustre un diagramme schématique du procédé de reconstruction du déplacement d'une cible selon l'invention,
Figures 3a 3e illustrent un exemple d'étapes de procédé de reconstruction du déplacement d'une cible à partir d'un signal modélisé pour un coefficient de rétro-injection optique égal à 0,5,
Figures 4a à 4e illustrent un exemple d'étapes de procédé de reconstruction du déplacement d'une cible à partir d'un signal modélisé pour un coefficient de rétro-injection optique égal à 3,
Figures 5a à 5e illustrent un exemple d'étapes de procédé de reconstruction du déplacement d'une cible à partir d'un signal modélisé pour un coefficient de rétro-injection optique égal à 5,
Figures 6a à 6e illustrent un exemple d'étapes de procédé de reconstruction du déplacement d'une cible à partir d'un signal réel faiblement perturbé par du speckle,
Figures 7a à 7d illustrent des courbes de comparaison entre la phase obtenue entre une méthode classique du dépliement de phase et la méthode de Hilbert, pour un signal modélisé avec un coefficient de rétro-injection optique égal à 0,5, et pour un signal réel fortement perturbé par du speckle,
Figures 8a à 8d illustrent le principe de reconstruction du déplacement de la cible pour un premier exemple de signal réel fortement perturbé par du speckle,
Figures 9a à 9d illustrent le principe de reconstruction du déplacement de la cible pour un second exemple de signal réel fortement perturbé par du speckle.

### Description détaillée de l'invention

L'exemple de réalisation du dispositif de mesure est décrit de manière détaillée dans son application au cas d'une mesure de déplacement d'une cible. Ce choix n'est pas limitatif et l'invention s'applique également à d'autres mesures de paramètres physiques d'une cible, telles que par exemple la mesure de sa vitesse ou encore de ses vibrations ou de sa distance absolue.

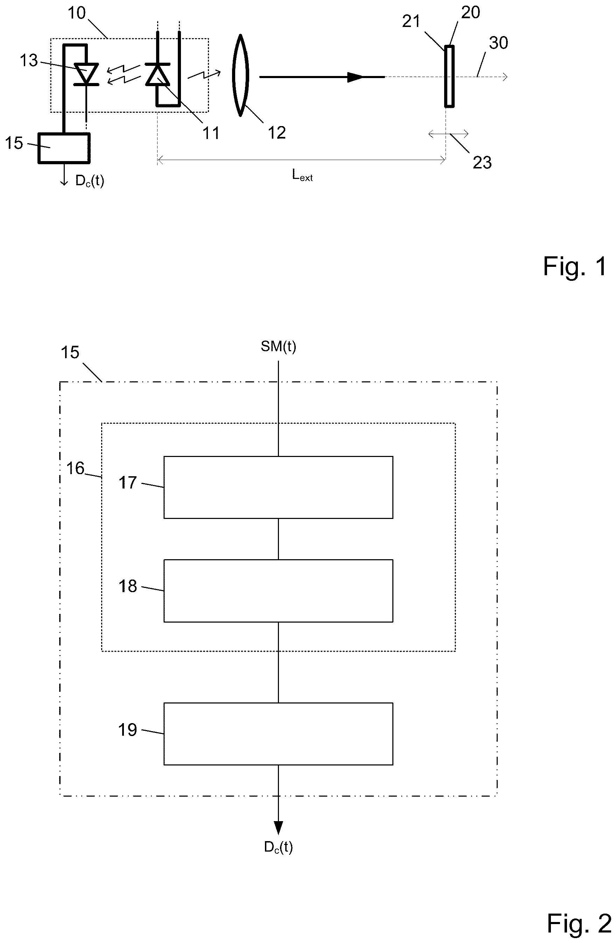

La figure 1 illustre schématiquement un dispositif optique 10 pour la mesure de déplacement d'une cible 20 selon un mode particulier de réalisation de l'invention et basé sur le phénomène de rétro-injection optique, précédemment exposé.

Le dispositif optique 10 comporte une source lumineuse laser 11, une lentille 12, un détecteur 13 et des moyens de conversion 15 d'un signal interférométrique obtenu en sortie du détecteur 13.

La source lumineuse laser 11, la lentille 12 et la cible 20 sont placées sur un axe optique commun 30.

La source lumineuse laser 11 est sensible à la rétro-injection optique. Elle comporte une cavité optique (non représentée) et est adaptée pour émettre un faisceau optique de mesure, de longueur d'onde λ, selon l'axe optique 30 en direction de la cible 20 et pour recevoir le faisceau de mesure réfléchi par ladite cible.

De préférence, la source lumineuse laser 11 est une diode laser, mais l'utilisation de tout autre type de source lumineuse laser, telle que par exemple un laser à gaz, est possible.

Dans un mode préféré de réalisation, la diode laser 11 est alimentée avec un courant à valeur sensiblement continue dans le temps.

Dans un autre mode de réalisation, la diode laser 11 est alimentée par un courant variable au cours du temps, tel qu'un courant périodique, par exemple de type sinusoïdal ou triangulaire.

Au contraire des interféromètres classiques, il n'est pas obligatoire de stabiliser la diode laser en longueur d'onde au moyen de systèmes d'asservissement entraînant un surcoût, la précision atteignable sans asservissement étant suffisante pour de nombreuses applications nécessitant un dispositif à faible coût.

La diode laser 11 est placée à une distance Lₑₓₜ de la cible.

La lentille 12 est placée sur un chemin optique parcouru par le faisceau optique de mesure et interposée entre la diode laser 11 et la cible 20.

De préférence, la lentille 12 est utilisée pour la mesure de déplacement de cible située pour des distances Lₑₓₜ supérieures à quelques centimètres. Elle n'est généralement pas nécessaire pour des distances Lₑₓₜ inférieures à quelques centimètres.

La lentille 12 est choisie d'une part de sorte à recevoir un faisceau de mesure issu de la diode laser 11 et à collimater/focaliser ledit faisceau de mesure en direction de la cible et d'autre part pour recevoir une fraction du faisceau de mesure réfléchi par la cible et pour le collimater/focaliser vers la cavité interne de la diode laser 11.

La cible 20 est en mouvement, comme indiqué schématiquement à titre d'exemple par la flèche 23, selon l'axe optique 30.

Le dispositif optique de mesure 10 selon l'invention est donc adapté à mesurer la projection du déplacement de la cible 20 le long de la direction de l'axe optique 30.

La cible 20 est adaptée pour recevoir au moins une partie du faisceau de mesure issu de la diode laser et présente une surface 21 apte à réfléchir tout ou partie dudit faisceau de mesure.

De préférence, la surface 21 de la cible 20 est sensiblement perpendiculaire à l'axe optique 30 afin d'obtenir la meilleure précision possible. Cependant, une perpendicularité par rapport à l'axe optique n'est pas essentielle pour obtenir une mesure de déplacement de la cible suivant l'invention.

En cas de non perpendicularité du déplacement, la mesure du déplacement de la cible se fera suivant la projection selon l'axe optique 30.

Dans un exemple de réalisation, la cible 20 peut être une partie d'un objet pour lequel le déplacement doit être mesuré.

Alternativement, la cible 20 peut être séparée de l'objet mais attachée à l'objet, de sorte que la mesure de déplacement de la cible est équivalente à la mesure du déplacement de l'objet.

La surface 21 de la cible 20 peut être sensiblement plane ou présenter un état de surface rugueux.

Le faisceau de mesure, non collimaté, issu de la diode laser 11, se dirige vers la lentille 12 qui le collimate/focalise vers la cible 20. La cible 20 en réfléchit une fraction.

Le faisceau de mesure réfléchi, après passage par la lentille 12, est réinjecté dans la cavité optique de la diode laser 11 créant avec le faisceau de mesure émis par la diode laser des interférences.

Lorsque la cible 20 est en déplacement selon l'axe optique 30, la longueur de chemin optique parcourue par le(s) faisceau(x), c'est-à-dire la distance aller-retour entre la diode laser 11 et la cible 20, varie, les interférences dépendantes du déplacement de la cible génèrent une variation de la puissance optique du faisceau de mesure émis par la diode laser 11.

Le détecteur de mesure 13 détecte la variation de la puissance optique du faisceau de mesure émis par la diode laser et la convertit en un signal, dit signal interférométrique SM(t), comportant les interférences dépendantes du déplacement de la cible au cours du temps. Ce signal interférométrique SM(t) peut être par exemple, un signal d'intensité de courant, de tension, de puissance ou encore un signal numérique.

Le détecteur de mesure est préférentiellement une photodiode 13. Dans un exemple préféré de réalisation, la photodiode 13 est une photodiode intégrée dans un même boîtier que la diode laser 11 et située sur une face arrière de ladite diode laser. Cette photodiode, servant habituellement à asservir la puissance d'émission de la diode laser, est mise à contribution pour détecter les variations de la puissance optique de la diode laser, induites par le phénomène de rétro-injection optique.

En sortie de ladite photodiode, les moyens de conversion 15 traitent le signal interférométrique SM(t) issu de la photodiode 13 et le convertissent en une mesure de déplacement D_{c}(t) de la cible.

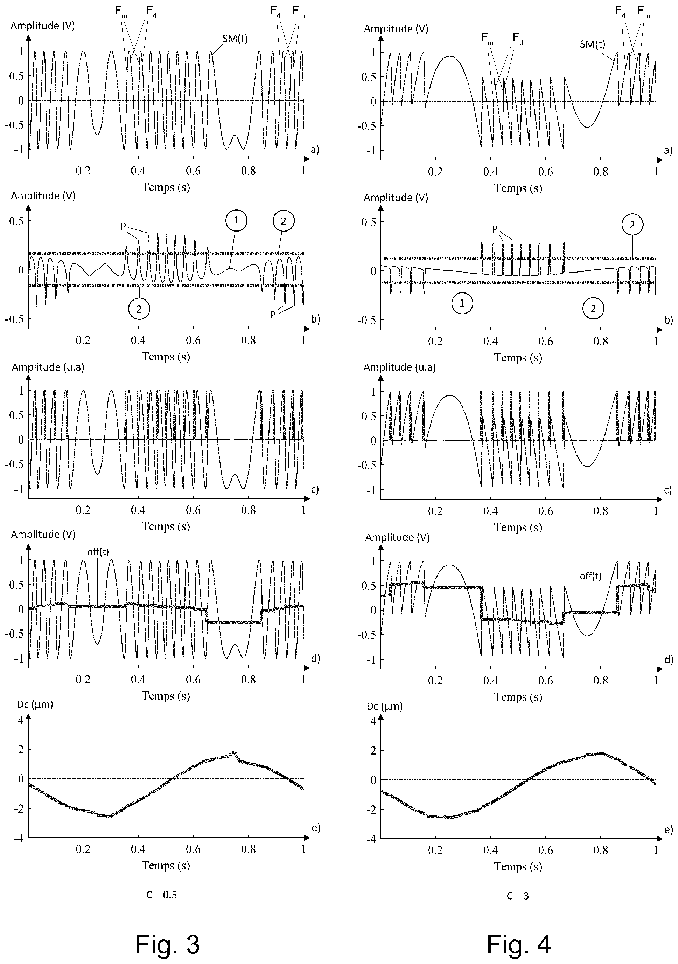

Les figures 3a, 4a, 5a et 6a représentent quatre allures typiques de signaux interférométriques obtenus pour quatre types de cibles.

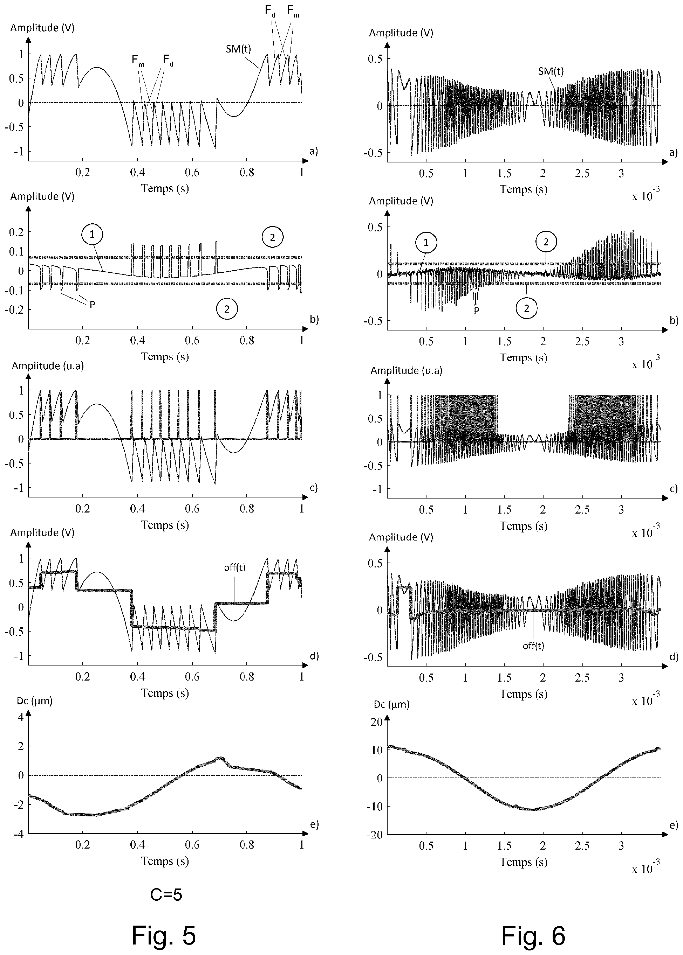

La figure 3a, respectivement figures 4a et 5a, illustre un signal interférométrique SM(t) en fonction du temps, pour un taux de rétro-injection C de 0,5, respectivement 3 et 5.

Les signaux interférométriques sont représentés par des franges interférométriques non sinusoïdales, présentant une forme spécifique en dents de scie asymétriques plus ou moins prononcée suivant la valeur du paramètre C. Le signal interférométrique SM(t) présente une allure quasi sinusoïdale pour un C faible, par exemple inférieur à 0,5. Il présente une allure en dents de scie de plus en plus prononcée, puis avec un phénomène d'hystérésis au fur et à mesure que le paramètre C augmente.

Chaque frange interférométrique présente un front montant Fₘ et un front descendant F_{d} . On définit un front montant Fₘ d'une frange d'interférence par rapport à un front descendant comme le front présentant le plus grand degré d'inclinaison et un front descendant F_{d} comme le front présentant le plus faible degré d'inclinaison. Les figures 3a, 4a et 5a illustrent clairement les fronts montant et descendant des franges interférométriques suivant la valeur du paramètre C.

La figure 6a illustre un signal interférométrique perturbé par du speckle.

Les moyens de conversion 15, détaillés à la figure 2, comportent :
- des moyens 16 de traitement du signal interférométrique SM(t) pour en déterminer des pics interférométriques,
- des moyens 19 de reconstruction du déplacement D_{c}(t) de la cible 20 à partir des pics interférométriques obtenus en sortie des moyens de traitement 16.

Ces moyens de conversion 15 peuvent être analogiques et/ou numériques.

Les moyens 16 de traitement comportent :
- des premiers moyens 17 de suppression d'une composante continue Off(t) du signal interférométrique SM(t),
- des seconds moyens 18 de détermination des pics interférométriques à partir du signal obtenu en sortie des premiers moyens 17. Les premiers moyens 17 sont configurés pour supprimer la composante continue localement pour chacune des franges d'interférences du signal interférométrique SM(t).

En d'autres termes, la composante continue Off(t) du signal est décomposée en un vecteur de N composantes continues locales.

N représente le nombre de franges d'interférences déterminées du signal d'interférence SM(t).

Chaque composante continue locale est associée à une frange d'interférence du signal d'interférences SM(t).

Une composante continue locale de la frange d'interférence associée est mesurée au niveau de celle-ci.

La composante continue Off(t) du signal interférométrique SM(t) est ensuite soustraite au signal interférométrique SM(t).

La suppression de cette composante continue permet avantageusement de s'affranchir des phénomènes d'hystérésis qui apparaissent dans le signal interférométrique lors d'un fort taux de rétro-injection optique C de la cible, par exemple lorsque C> 4,7, comme par exemple le signal illustré sur la figure 5a.

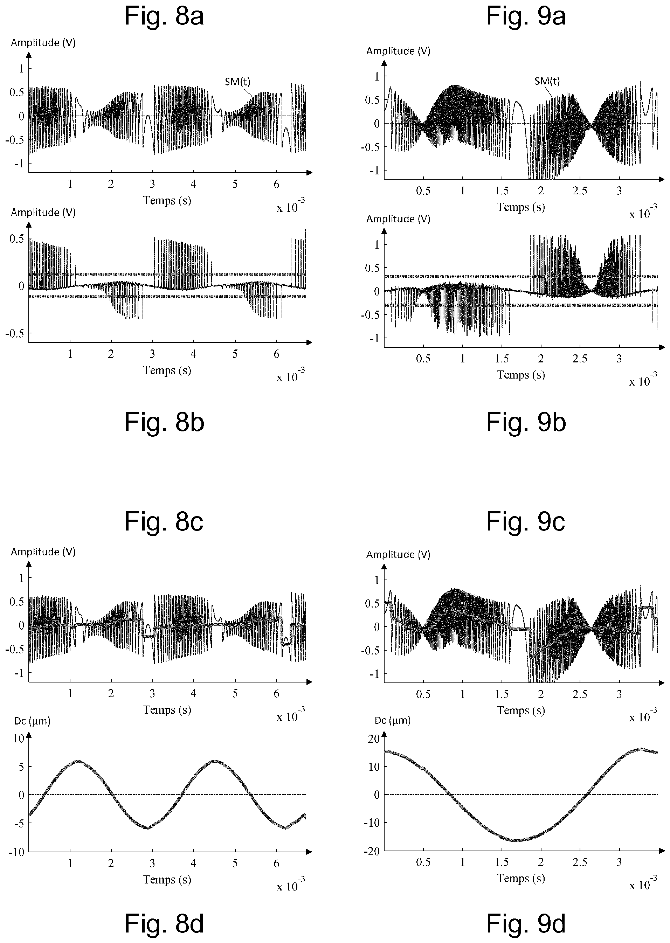

Cette suppression de cette composante continue permet également de s'affranchir des phénomènes d'évanouissements momentanés de l'amplitude, communément connus sous le terme de fading, liés au speckle, comme pour le signal illustré figure 9a.

L'affranchissement des phénomènes d'hystérésis et de fading dans le signal interférométrique SM(t) permet de ne recourir avantageusement qu'à un unique algorithme de traitement de signal, quelque soit la distance et l'état de surface de la cible dont on cherche à mesurer le déplacement. Les seconds moyens 18 comportent :
- un filtre de Hilbert pour déterminer des composantes en phase et en quadrature du signal interférométrique SM(t) à partir du signal obtenu en sortie des premiers moyens 17 ; le signal obtenu présente une forme analytique,
- un moyen de calcul pour calculer la phase du signal interférométrique à partir de ces composantes ; la phase obtenue est modulo 2π,
- un moyen d'obtention des pics interférométriques à partir de la phase du signal interférométrique.

L'utilisation du filtre de Hilbert permet de déterminer l'ensemble des pics interférométriques, quelque soit la rugosité de la cible et quelque soit la forme du signal interférométrique (phénomène de fading, d'hystérésis, ...).

L'utilisation du filtre de Hilbert associé à un signal interférométrique issu du phénomène de rétro-injection optique permet de supprimer l'influence de l'évanouissement momentanée du signal interférométrique lié à la rugosité de la cible.

La détermination de l'ensemble des pics interférométriques du signal interférométrique conduit par conséquent à l'amélioration de la précision de la mesure du déplacement de la cible.

L'avantage d'un tel filtre de Hilbert réside également dans le fait qu'il peut être implémenté en hardware, via un filtre analogique, ou software, via un filtre numérique, selon les besoins.

Dans un exemple de moyens de reconstruction 19, lesdits moyens de conversion utilisent une méthode de dépliement de phase pour reconstruire le déplacement de la cible.

Cette méthode est une méthode connue en tant que telle et ne sera donc pas décrite.

Ces moyens de reconstruction 19 peuvent être analogiques et/ou numériques suivant le signal interférométrique SM(t).

Les moyens de calculs 15 précédemment décrits du dispositif de mesure présentent l'avantage de ne pas requérir à des moyens de calibrage de la diode laser, à travers la détermination de son facteur d'élargissement de raie α, et/ou du paramètre C.

A titre représentatif de l'invention, les figures 3a-d, 4a-d, 5a-d et 6a-d illustrent un exemple d'étapes permettant d'obtenir la suppression de la composante continue du signal interférométrique, réalisées via les premiers moyens 17. Pour les figures 3a-d, il a été simulé un signal interférométrique théorique avec un taux de rétro-injection C de 0,5.

Les trois signaux (figures 3a-d, 4a-d et 5a-d) interférométriques sont réalisés à partir du logiciel Matlab^{®}. Les signaux interférométriques sont crées à partir d'un modèle comportemental des signaux interférométriques issus du phénomène de rétro-injection optique décrit dans la publication de Plantier et al. : « Behavioral model of a self-mixing laser diode Sensor», IEEE Journal of Quantum Electronics, vol.41, n°9, Septembre 2005.

Les trois signaux interférométriques simulés correspondent à un déplacement de la cible équivalent à cinq fois la valeur de longueur d'onde de la diode laser simulée. La distance laser-cible n'est pas introduite de manière directe, mais la variation de la valeur de rétro injection C met en évidence cette relation du fait qu'elle dépend du type de surface et de la distance laser-cible.

Les figures 3a, 4a, 5a et 6a illustrent comme précédemment décrit le signal interférométrique SM(t) obtenu en sortie de la photodiode 13.

Dans une première étape, le signal interférométrique SM(t) est filtré, via par exemple un filtre passe-haut, qui est l'équivalent d'un dérivateur. Le signal filtré SM_{f}(t) est représenté sur les figures 3b, 4b, 5b et 6b par la courbe 1. Le signal SM_{f}(t) présente des pics interférométriques P. Sur l'exemple des figures 3b et 4b, le nombre de pics interférométriques P est de 18. Sur l'exemple de la figure 5b, le nombre de pics interférométriques est de 17.

Dans une étape ultérieure, un seuil positif et un seuil négatif sont établis. Les seuils sont calculés de manière automatique à la taille de la fenêtre d'échantillonnage reçue. Les deux seuils sont également représentés sur les figures 3b, 4b, 5b et 6b par les deux courbes 2.

Des temps de déclenchement où les pics interférométriques P apparaissent au-delà d'un des deux seuils sont ensuite détectés. Les figures 3c, 4c, 5c, 6c illustrent ces temps de déclenchement. Le signal interférométrique SM(t) est également représenté sur ces figures.

Le signal interférométrique SM(t) compris entre deux temps de déclenchement successifs représente une pseudo-frange dudit signal interférométrique SM(t).

On constate qu'une pseudo-frange correspond généralement à une frange d'interférence du signal interférométrique SM(t), comme il est illustré sur les figures 3c, 4c, 5c et 6c.

Dans certains cas, suivant la valeur définie des seuils, certains pics interférométriques ne sont pas détectés. Une pseudo-frange correspond alors à une pluralité de franges d'interférence successives, comme illustré sur la figure 6c.

Les pics interférométriques P dépassant l'un des deux seuils entraînent le déclenchement d'un filtre moyenneur sur le signal interférométrique SM(t). On détermine, via ce filtre moyenneur, les moyennes locales, ou composantes continues locales, du signal interférométrique SM(t) entre deux temps de déclenchement, correspondant à chaque pseudo-frange déterminée, comme illustré sur les figures 3d, 4d, 5d et 6d. Le signal interférométrique SM(t) est également représenté sur ces figures.

L'ensemble des composantes continues locales, dit composante continue Off(t), est ensuite soustrait au signal interférométrique SM(t).

Le signal interférométrique obtenu est un signal dit signal interférométrique corrigé SM_{c}(t).

Le signal interférométrique SM(t) est ainsi décalé localement autour de zéro.

La suppression de chaque composante continue locale associée à chaque pseudo-frange garantit ainsi qu'il n'y a pas de restriction pour l'usage de la transformée de Hilbert que nous allons décrire par la suite.

Il est ainsi aisé, au vu des différentes figures, de constater l'effet non intrusif du traitement sur les signaux interférométriques modélisés ne présentant pas de phénomène d'hystérésis ou autres phénomènes qui perturbent le signal tel que le fading.

Toutes les étapes précédemment décrites sont réalisées via les premiers moyens 17.

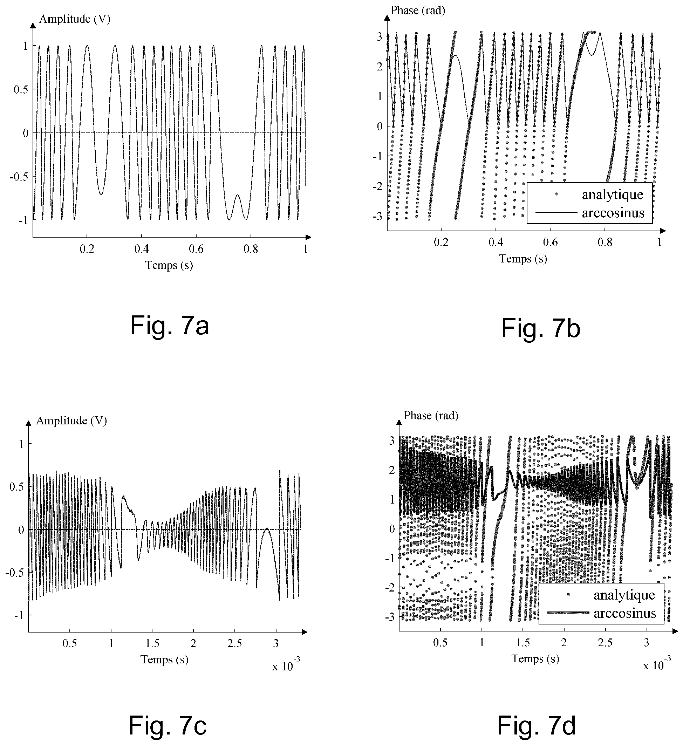

Lors d'une étape ultérieure, réalisée via les seconds moyens 18, la forme analytique du signal interférométrique SM(t) est déterminée via un filtre de Hilbert pour en calculer sa phase modulo 2π. L'avantage de l'utilisation du filtre de Hilbert est illustrée (figures 7a à 7d) en comparaison avec une méthode classique de calcul de phase.

A titre d'exemple, sur la figure 7a, un signal interférométrique SM(t) a été simulé avec un taux de rétro-injection C égal à 0,5.

Le calcul de la phase associée a été réalisé de deux manières :
- à partir d'une fonction classique « arccos » de type connu en soi,
- à partir de la fonction analytique (transformée de Hilbert).

Le signal d'amplitude constante, obtenu à partir de la fonction classique, est situé dans l'intervalle [0 ; π], comme illustré sur la figure 7b par la courbe continue « arccosinus ».

Le signal d'amplitude constante, obtenu à partir de la fonction analytique, est situé dans l'intervalle [-π ; π], comme illustré sur la figure 7b par la courbe en pointillée « analytique ».

On constate que, sur les deux signaux d'amplitude, la distinction des franges d'interférence est facilement exploitable par un unique seuil, de valeur π.

Sur la figure 7c, un signal interférométrique SM(t) simulé présente une atténuation aléatoire en amplitude.

Le signal d'amplitude constante, obtenu à partir de la fonction classique, est situé dans l'intervalle [0 ; π], comme illustré sur la figure 7d par la courbe continue « arccosinus ».

Le signal d'amplitude constante, obtenu à partir de la fonction analytique, est situé dans l'intervalle [-π ; π], comme illustré sur la figure 7d par la courbe en pointillée « analytique ».

On constate que le choix de fixer une valeur de seuil à π, ne permet pas de distinguer les franges d'interférence pour la fonction classique.

Par contre, la distinction des franges d'interférence est toujours exploitable par l'unique seuil, de valeur π, pour la fonction analytique. L'utilisation de la transformée de Hilbert n'a pas besoin de suivre l'enveloppe, ni l'allure du signal pour le calcul de phase du signal interférométrique.

Lorsque la phase du signal interférométrique SM(t) déterminée, l'ensemble des pics interférométriques est déterminé.

Dans une dernière étape, le déplacement de la cible 20, autant en direction qu'en amplitude, est déterminé à partir de l'ensemble des pics interférométriques.

Cette étape est connue en tant que tel et ne sera pas décrite ici.

A titre indicatif, l'orientation des dents de scie des franges interférométriques donne le sens de déplacement de la cible. Lorsque la dent de scie change d'inclinaison, la cible change de direction de mouvement.

Les figures 3e, 4e, 5e, 6e illustrent le déplacement Dc(t) reconstitué de la cible obtenu à partir du signal corrigé SM_{c}(t) et après passage dans le filtre de Hilbert.

Il est intéressant de noter que les premiers moyens 17 n'ont pas pour but de déterminer tous les pics interférométriques P nécessaires à la reconstruction du déplacement de la cible. L'intérêt des premiers moyens 17 est de réaliser un pré-filtrage pour caler le signal interférométrique sensiblement autour de zéro. Ce sont les seconds moyens 18 qui permettent de retrouver l'ensemble des pics interférométriques pour en ressortir la phase du signal interférométrique SM(t), comprise entre -n et π, à partir du filtre de Hilbert.

Afin d'illustrer la précision obtenue sur le déplacement reconstitué de la cible à partir du dispositif de mesure selon l'invention, de nombreuses expériences ont été réalisées et sont synthétisées ci dessous sur la forme de deux exemples.

Pour toutes les expériences :
- la source lumineuse laser est une diode laser de type HL 7851 G LD d'Hitachi^{®} émettant à une longueur d'onde λ de 785nm avec photodiode intégrée. La diode laser est alimentée par un courant d'injection constante de 70 mA, et a une puissance de sortie maximale de 20mW. Le faisceau émis est collimaté à travers une lentille de focale 5mm et est focalisé sur une cible de diamètre 80mm,
- la cible est positionnée à une distance de 45cm de la diode laser, et le déplacement de celle-ci est généré par un générateur de fonction de type AFG3022 de Tektronix^{®}. La cible vibre à une fréquence fixe de 300Hz de manière sinusoïdale, avec une amplitude crête-crête de 10 V. La cible se déplace selon l'axe 30.

Les signaux interférométriques sont observés et enregistrés via un amplificateur transimpédance et un oscilloscope de type HRO 66Zi de LeCroy^{®}.

Les signaux interférométriques sont traités pour reconstruire le déplacement D(t) de la cible.

Deux expériences sont maintenant présentées. Les résultats obtenus sont illustrés respectivement figures 8a-d et 9a-d.

Exemple 1 : la cible 20 est recouverte avec du papier de verre P40 présentant une rugosité moyenne de 425µm.

Les résultats sont obtenus sur les figures 8a à 8d.

La figure 8a illustre le signal interférométrique SM(t) mesuré par la photodiode. On constate que le signal est dégradé en amplitude du à l'effet du speckle.

La figure 8b illustre le signal interférométrique filtré SM_{f}.

La figure 8c illustre le signal interférométrique SM(t) et la composante continue Off(t) calculée (ensemble de composantes locales mesurées par frange).

La figure 8d illustre le déplacement reconstruit D_{c}(t).

Ce premier exemple illustre clairement le fait que le dispositif de mesure suivant l'invention permet de reconstituer le déplacement réel d'une cible rugueuse.

Exemple 2 : la cible est recouverte d'un matériau en phosphore active dans l'infrarouge, comportant un évanouissement lent, de type VRC2 de Thorlabs^{®}.

Les résultats sont obtenus sur les figures 9a à 9d.

La figure 9a illustre le signal interférométrique SM(t) mesuré par la photodiode. On constate que le signal est nettement plus dégradé en amplitude par le speckle que pour la figure 8a. On constate également une perte du signal interférométrique SM(t) aux temps t = 0.5 ms et t = 2.7 ms.

La figure 9b illustre le signal interférométrique filtré SM_{f}.

La figure 9c illustre le signal interférométrique SM(t) et la composante continue Off(t) calculée.

La figure 9d illustre le déplacement reconstruit D_{c}(t).

Ce second exemple illustre parfaitement le fait que le dispositif de mesure suivant l'invention permet de reconstituer le déplacement réel d'une cible même en présence d'une perte d'information temporaire.

Ces exemples confirment clairement la robustesse du dispositif de mesure et le traitement de signal associé pour différents état de surface d'une cible.

Le dispositif de mesure suivant l'invention ainsi que le traitement du signal associé permet avantageusement de réduire l'erreur de mesure de déplacement de la cible causée par les erreurs de comptage de pics. Il permet, via un traitement de signal en temps réel adapté, de traiter toutes les allures de signaux interférométriques suivant l'état de surface de la cible et sans condition sur l'allure du signal interférométrique.

Le dispositif de mesure suivant l'invention est un dispositif simple à réaliser, peu encombrant (sans composants externes de type optiques, mécaniques ou électroniques supplémentaires à la configuration de base), auto-aligné et robuste pour la mesure de déplacement quelque soit l'état de surface de la cible utilisée et sa distance par rapport à la source laser. Il présente également l'avantage d'être d'un coût abordable et transportable en milieu industriel.

## Revendications

1. Dispositif (10) optique, basé sur le phénomène de retro injection optique, pour la détermination d'un paramètre physique comportant :
- une source lumineuse laser (11) pour générer un faisceau lumineux, dit faisceau émis, en direction d'une cible,
- un moyen de détection (13) d'un signal interférométrique SM(t), ledit signal interférométrique comportant des franges d'interférences, l'information sur le paramètre physique à déterminer, et étant généré par une interférence entre le faisceau émis et un faisceau lumineux réfléchi par la cible,
- des moyens de conversion (15) du signal interférométrique SM(t) obtenu par le moyen de détection (13) en une mesure du paramètre physique,
**caractérisé en ce que** lesdits moyens de conversion (15) comportent :
- des premiers moyens (17) de suppression d'une composante continue Off(t) du signal interférométrique SM(t), lesdits premiers moyens étant configurés pour supprimer la composante continue localement pour chacune des franges d'interférence du signal interférométrique,
- des seconds moyens (18) de détermination de pics interférométriques du signal interférométrique SM(t) obtenus à partir du signal obtenu en sortie des premiers moyens (17), les seconds moyens (18) comportant un filtre de Hilbert.

2. Dispositif (10) optique selon la revendication 1 ne comportant pas de moyens de calibrage de la source lumineuse laser.

3. Procédé de traitement d'un signal interférométrique SM(t) obtenu par rétro injection optique, au moyen d'un dispositif optique (10) selon l'une des revendications 1 ou 2, ledit signal interférométrique comportant des franges d'interférences, **caractérisé en ce qu'**il comporte les étapes successives de :
- suppression d'une composante continue Off(t) du signal interférométrique SM(t), pour obtenir un signal corrigé SM_{c}(t), par les premiers moyens (17), ladite composante continue Off(t) du signal interférométrique étant supprimée de façon locale, pour chaque frange d'interférence détectée du signal interférométrique SM(t).
- détermination de pics interférométriques dudit signal interférométrique SM(t) à partir du signal corrigé SM_{c}(t) par les seconds moyens (18), ladite détermination des pics interférométriques étant obtenue par application d'un filtre de Hilbert au signal corrigé SM_{c}(t).

4. Procédé de détermination d'un paramètre physique comportant une étape de traitement d'un signal interférométrique SM(t) selon le procédé selon la revendication 3, ledit signal interférométrique comportant l'information sur le paramètre physique à déterminer, puis une étape de détermination du paramètre physique à partir de la détermination des pics interférométriques du signal interférométrique SM(t).

5. Procédé selon la revendication 4 comportant une étape préalable d'acquisition du signal interférométrique SM(t) obtenue à partir du dispositif selon l'une des revendications 1 ou 2.

6. Procédé selon la revendication 5 ne comportant pas d'étape de calibrage de la source lumineuse laser.

7. Procédé de détermination d'un déplacement d'une cible comportant une étape de traitement d'un signal interférométrique SM(t) selon le procédé selon la revendication 3, ledit signal interférométrique comportant l'information sur le paramètre physique à déterminer, puis une étape de reconstitution du déplacement de la cible à partir de la détermination des pics interférométriques du signal interférométrique SM(t).

## Patentansprüche

1. Optische Vorrichtung (10), basierend auf dem Phänomen der optischen Rück-Injektion, zur Bestimmung eines physikalischen Parameters, die aufweist:
- eine Laserlichtquelle (11) zur Erzeugung eines Lichtstrahls, emittierter Strahl genannt, in Richtung eines Ziels,
- eine Erfassungseinrichtung (13) eines interferometrischen Signals SM(t), wobei das interferometrische Signal Interferenzstreifen, die Information über den zu bestimmenden physikalischen Parameter aufweist und von einer Interferenz zwischen dem emittierten Strahl und einem vom Ziel reflektierten Lichtstrahl erzeugt wird,
- Umwandlungseinrichtungen (15) des durch die Erfassungseinrichtung (13) erhaltenen interferometrischen Signals SM(t) in einen Messwert des physikalischen Parameters,
**dadurch gekennzeichnet, dass** die Umwandlungseinrichtungen (15) aufweisen:
- erste Einrichtungen (17) zur Unterdrückung eines Gleichanteils Off(t) des interferometrischen Signals SM(t), wobei die ersten Einrichtungen konfiguriert sind, den Gleichanteil lokal für jeden der Interferenzstreifen des interferometrischen Signals zu unterdrücken,
- zweite Einrichtungen (18) zur Bestimmung interferometrischer Spitzen des interferometrischen Signals SM(t), die ausgehend vom am Ausgang der ersten Einrichtungen (17) erhaltenen Signal erhalten werden, wobei die zweiten Einrichtungen (18) ein Hilbert-Filter aufweisen.

2. Optische Vorrichtung (10) nach Anspruch 1, die keine Kalibrierungseinrichtungen der Laserlichtquelle aufweist.

3. Verfahren zur Verarbeitung eines durch optische Rück-Injektion erhaltenen interferometrischen Signals SM(t) mittels einer optischen Vorrichtung (10) nach einem der Ansprüche 1 oder 2, wobei das interferometrische Signal Interferenzstreifen aufweist, **dadurch gekennzeichnet, dass** es die aufeinanderfolgenden Schritte aufweist:
- Unterdrückung eines Gleichanteils Off(t) des interferometrischen Signals SM(t), um ein korrigiertes Signal SM_{c}(t) zu erhalten, durch die ersten Einrichtungen (17), wobei der Gleichanteil Off(t) des interferometrischen Signals für jeden erfassten Interferenzstreifen des interferometrischen Signals SM(t) lokal unterdrückt wird,
- Bestimmung von interferometrischen Spitzen des interferometrischen Signals SM(t) ausgehend vom korrigierten Signal SM_{c}(t) durch die zweiten Einrichtungen (18), wobei die Bestimmung der interferometrischen Spitzen durch Anwendung eines Hilbert-Filters an das korrigierte Signal SM_{c}(t) erhalten wird.

4. Verfahren zur Bestimmung eines physikalischen Parameters, das einen Schritt der Verarbeitung eines interferometrischen Signals SM(t) gemäß dem Verfahren nach Anspruch 3, wobei das interferometrische Signal die Information über den zu bestimmenden physikalischen Parameter aufweist, dann einen Schritt der Bestimmung des physikalischen Parameters ausgehend von der Bestimmung der interferometrischen Spitzen des interferometrischen Signals SM(t) aufweist.

5. Verfahren nach Anspruch 4, das einen vorhergehenden Schritt der Erfassung des interferometrischen Signals SM(t) aufweist, das ausgehend von der Vorrichtung nach einem der Ansprüche 1 oder 2 erhalten wird.

6. Verfahren nach Anspruch 5, das keinen Schritt der Kalibrierung der Laserlichtquelle aufweist.

7. Verfahren zur Bestimmung einer Verschiebung eines Ziels, das einen Schritt der Verarbeitung eines interferometrischen Signals SM(t) gemäß dem Verfahren nach Anspruch 3, wobei das interferometrische Signal die Information über den zu bestimmenden physikalischen Parameter aufweist, dann einen Schritt der Wiederherstellung der Verschiebung des Ziels ausgehend von der Bestimmung der interferometrischen Spitzen des interferometrischen Signals SM(t) aufweist.

## Claims

1. Optical device (10), based on the self-mixing effect, for determining a physical parameter, including:
- a laser light source (11) for generating a light beam, called the emitted beam, in the direction of a target;
- a means (13) for detecting an interferometric signal SM(t), said interferometric signal including interference fringes and information on the physical parameter to be determined, and being generated by interference between the emitted beam and a light beam reflected by the target; and
- means (15) for converting the interferometric signal SM(t) obtained by the detecting means (13) into a measurement of the physical parameter;
**characterized in that** said converting means (15) include:
- first means (17) for removing a continuous component Off(t) from the interferometric signal SM(t), said first means being configured to remove the continuous component locally for each of the interference fringes of the interferometric signal; and
- second means (18) for determining interferometric peaks of the interferometric signal SM(t), said peaks being obtained from the signal obtained as output from the first means (17), the second means (18) including a Hilbert filter.

2. Optical device (10) according to Claim 1, not including means for calibrating the laser light source.

3. Method for processing an interferometric signal SM(t) obtained by self-mixing, by means of an optical device (10) according to either of Claims 1 and 2, said interferometric signal including interference fringes, **characterized in that** it includes, in succession, the steps of:
- removing a continuous component Off(t) from the interferometric signal SM(t), in order to obtain a corrected signal SM_{c}(t), using the first means (17), said continuous component Off(t) of the interferometric signal being removed locally, for each detected interference fringe of the interferometric signal SM(t); and
- determining interferometric peaks of said interferometric signal SM(t) from the corrected signal SM_{c}(t) using the second means (18), said interferometric peaks being determined by applying a Hilbert filter to the corrected signal SM_{c}(t).

4. Method for determining a physical parameter, including a step of processing an interferometric signal SM(t) using the method according to Claim 3, said interferometric signal including information on the physical parameter to be determined, then a step of determining the physical parameter from the determined interferometric peaks of the interferometric signal SM(t).

5. Method according to Claim 4, including a prior step of acquiring the interferometric signal SM(t) carried out using the device according to either of Claims 1 and 2.

6. Method according to Claim 5, not including a step of calibration of the laser light source.

7. Method for determining a movement of a target, including a step of processing an interferometric signal SM(t) using the method according to Claim 3, said interferometric signal including information on the physical parameter to be determined, then a step of reconstructing the movement of the target from the determined interferometric peaks of the interferometric signal SM(t).
